# EUROPÄISCHE PATENTSCHRIFT

(11) **EP 2 145 241 B1**
(45) Veröffentlichungstag und Bekanntmachung des Hinweises auf die Patenterteilung: **25.03.2015**
(21) Anmeldenummer: 08749235.1
(22) Anmeldetag: 30.04.2008
(51) Int. Cl.: G05G 1/02, G05G 1/08, G05G 9/047, G05G 1/01, B60K 37/06

(54) **KRAFTFAHRZEUG MIT EINER BEDIENEINRICHTUNG**
MOTOR VEHICLE WITH A CONTROL DEVICE
VEHICULE AVEC UN DISPOSITIF DE COMMANDE

(30) Priorität: 14.05.2007 DE 102007022526
(43) Veröffentlichungstag der Anmeldung: 20.01.2010
(73) Patentinhaber: Bayerische Motoren Werke Aktiengesellschaft, 80809 München (DE)
(72) Erfinder: KUENZNER, Hermann, 85356 Freising (DE); KNOLL, Christian, 80538 München (DE); SYRING, Jan, 72555 Metzingen (DE)
(74) Vertreter: Mayer-Martin, Christian
(86) Internationale Anmeldenummer: PCT/EP2008/003485
(87) Internationale Veröffentlichungsnummer: WO 2008/138491

(56) Entgegenhaltungen:
- EP-A- 1 258 385
- EP-A- 1 343 113
- EP-A- 1 708 219
- EP-A2- 1 080 974
- US-A1- 2004 189 595

## Beschreibung

Die Erfindung betrifft ein kraftfahrzeug mit einer Bedieneinrichtung.

Moderne Kraftfahrzeuge verfügen zunehmend über eine separat von einer Anzeigeeinrichtung gebildete Bedieneinrichtung im Bereich der Mittelkonsole. Eine solche Bedieneinrichtung ist beispielsweise aus der EP 0893750 B1 bekannt. Die Bedieneinrichtung verfügt dabei über ein bidirektional um seine Symmetrieachse drehbares Schaltglied, das zudem axial bewegbar (drückbar) und schwenkbar gelagert ist. Damit können durch ein Drehen, Drücken und/oder Schwenken des Schaltgliedes beispielsweise Menüpunkte auf einer Anzeigeeinrichtung markiert und ausgewählt werden oder Parameter eingestellt werden.

Der Erfindung liegt nun die Aufgabe zu Grunde, ein Kraftfahrzeug mit einer Bedieneinrichtung zu schaffen, bei der ein, insbesondere fahrzeugtechnisches, System, wie beispielsweise ein Navigationssystem und/oder ein Entertainmentsystem, insbesondere während der Fahrt, sicher bedienbar ist.

Diese Aufgabe wird durch die Merkmale des Hauptanspruchs gelöst. Vorteilhafte Weiterbildungen der Erfindung sind den abhängigen Ansprüchen zu entnehmen.

Umfangreiche der Erfindung zu Grunde liegende Untersuchungen ergaben, dass eine lediglich aus einem, gegebenenfalls schwenkbaren, Dreh-Drück-Element bestehende Bedieneinrichtung nicht allen möglichen Nutzergruppen eine sichere, einfache und leicht erlernbare Bedienung insbesondere während der Fahrt ermöglicht.

Daher wird gemäß der Erfindung ein Dreh-Drück-Element, das auf der Mittelkonsole des Kraftfahrzeuges angeordnet ist, um zwei Wippschalter, ergänzt. Diese werden vordem Dreh-Drück-Element angeordnet, da sich vor dem Dreh-Drück-Element angeordnete Schalter, insbesondere während der Fahrt, als einfacher in der Handhabung erwiesen.

Im Rahmen der Erfindung umfasst der Begriff "Schalter" auch Tasten, insbesondere monostabile Tasten. "Wippschalter" sind im Rahmen der Erfindung insbesondere in der Mittellage zwischen zwei Anschlägen monostabile Wippen.

Die folgenden Weiterbildungen der Erfindung erwiesen sich bei umfangreichen - mit eigens für diesen Zweck erstellten Versuchsanordnungen - Simulationen (usability tests) als besonders zweckmäßig hinsichtlich Ergonomie, Erlernbarkeit und/oder schneller, intuitiver und/oder sicherer Bedienbarkeit insbesondere während der Fahrt (also ohne oder mit nur kurzer visueller Unterstützung).

Die Wippschalter werden symmetrisch um einen zentral vor dem Dreh-Drück-Element angeordneten Drück-Schalter (Taste) angeordnet.

Die Wippschalter sind haptisch von dem Drück-Schalter unterscheid bar ausgeführt, vorzugsweise dadurch, dass die Wippschalter jeweils eine konkave Oberfläche aufweisen, und der Drück-Schalter eine konvexe Oberfläche aufweist, oder umgekehrt.

Zwei weitere Schalter, insbesondere Drück-Schalter (Tasten), sind in Fahrtrichtung hinter dem Dreh-Drück-Element angeordnet.

Vorzugsweise sind seitlich von dem Dreh-Drück-Element keine Schalter oder Bedienelemente angeordnet.

Die Wippschalter und/oder die Schalter bzw. Drück-Schalter umgeben das Dreh-Drück-Element vorzugsweise im Wesentlichen unmittelbar. Insbesondere sind zwischen Wippschalter, Schalter bzw. Drück-Schalter und Dreh-Drück-Element keine anderen Bedienelemente angeordnet. Beispielsweise sind Wippschalter, Schalter bzw. Drück-Schalter und Dreh-Drück-Element unmittelbar benachbart oder angrenzend angeordnet, so dass ein Nutzer, der das Dreh-Drück-Element bedient, ohne hinzusehen, mit einer Hand, leicht und sicher die benachbarten Wippschalter, Schalter bzw. Drück-Schalter findet und umgekehrt. Ein Umgreifen zwischen Wippschalter, Schalter bzw. Drück-Schalter und Dreh-Drück-Element und umgekehrt ist einfach möglich. Besonders bevorzugt ist vorgesehen, dass das Zentrum der Wippschalter, Schalter und/oder Drück-Schalter weniger als 3 cm, 4 cm, 5 cm oder 6cm von dem Zentrum des Dreh-Drück-Elementes entfernt ist.

Vorzugsweise sind durch die vor dem Dreh-Drück-Element angeordneten Wippschalter Funktionen auswählbar, die in der Regel häufiger ausgewählt werden als die Funktionen, die durch die hinter dem Dreh-Drück-Element angeordneten Schalter auswählbar sind.

Durch die vor dem Dreh-Drück-Element angeordneten Wippschalter (Direkteinsprungtasten) sind Direkteinsprungfunktionen, wie beispielsweise eine, mehrere oder alle der folgenden Funktionen oder Menüpunkte, auswählbar: CD, Radio, Telefon, Navigation (Direkteinsprungfunktionen).

Durch die hinter dem Dreh-Drück-Element angeordneten Schalter sind eine oder alle der folgenden Funktionen oder Menüpunkte auswählbar: Zurück und Optionsmenü.

Durch den zentral vor dem Dreh-Drück-Element angeordneten Schalter ist die Funktion Hauptmenü auswählbar.

Bevorzugt ist vorgesehen, dass das Dreh-Drück-Element zumindest teilweise senkrecht zur Drück-Richtung in zumindest vier Richtungen kippbar, schwenkbar oder schiebbar ausgeführt ist, um Menüpunkte auszuwählen oder Funktionen des Fahrzeuges auszuwählen oder zu beeinflussen.

Das Dreh-Drück-Element umfasst vorzugsweise ein um eine Rotationsachse drehbares und in Richtung der Rotationsachse drückbares Drehelement und ein unter dem Drehelement angeordnetes Kippelement.

Dabei kann die Rotationsachse zudem die Symmetrieachse und/oder die Längsachse des Drehelementes und/oder des Kippelementes (insbesondere im Grundzustand) bilden. Die beispielsweise zwei, vier oder acht Kipprichtungen des Kippelementes sind vorzugsweise im Wesentlichen senkrecht zur Rotationsachse gerichtet. Zwischen Drehelement und Kippelement ist vorteilhafterweise kein weiteres Element angeordnet.

Eine vorteilhafte Ausführungsform sieht vor, dass das Kippelement derart mit dem Drehelement zusammenwirkt, dass zwar ein Kippen des Kippelementes ein Kippen des Drehelementes (Kipp-Drehelement) bewirkt und/oder ein Kippen des Drehelementes (Kipp-Drehelement) ein Kippen des Kippelementes bewirkt, dass das Kippelement selbst aber vorzugsweise nicht drehbar ist.

Dadurch wird erreicht, dass durch den Nutzer oder Bediener ein besonders einfaches und komfortables Kippen des Kippelementes möglich ist, aber ein versehentliches Drehen des Drehelementes beim beabsichtigten Kippen des Kippelementes durch eine Betätigung nur des Kippelementes oder durch die drehhemmende Wirkung des Kippelementes verhindert werden kann, beispielsweise weil ein Finger beim Kippen auf dem drehfesten Kippelement ruht.

Vorzugsweise ist das Kippelement derart unabhängig von dem Drehelement gelagert oder befestigt, dass ein Drehen des Drehelementes um seine Rotationsachse oder Längsachse kein Drehen des Kippelementes bewirkt. Insbesondere ist das Kippelement nicht drehbar gelagert oder bezüglich einer Drehung um die Rotationsachse des Drehelementes fest.

Um das Kippelement auch während der Fahrt, insbesondere ohne hinzusehen, sicher erfühlen und bedienen zu können, ragt das Kippelement in einer Ebene senkrecht zur Rotationsachse des Drehelementes unter dem Drehelement hervor. Es liegt dabei auch ein Kippelement im Rahmen der Erfindung, das im Wesentlichen nur aus dem hervorragenden Anteil besteht.

Die Bedienbarkeit wird weiter verbessert, indem das Drehelement und/oder das Kippelement in einer Ebene senkrecht zur Rotationsachse einen kreisförmigen Querschnitt aufweist.

Vorteilhafterweise sind das Kippelement und das Drehelement konzentrisch zueinander ausgebildet oder angeordnet. Dadurch ist das Kippelement und das Drehelement mit einer Hand bedienbar, ohne die gesamte Hand zwischen einer Kippbewegung und einer Drehung anders platzieren zu müssen. Dies vereinfacht und beschleunigt eine Handhabung der Bedieneinrichtung weiter.

Vorzugsweise weist die unter dem Drehelement hervorragende, insbesondere ringförmige, Oberseite des Kippelementes eine um das Drehelement umlaufende Rille oder Rinne auf, welche als Angriffsfläche dient, um das Kippelement und damit gegebenenfalls das Drehelement in eine gewünschte Richtung zu kippen.

Alternativ oder ergänzend dazu weist das Drehelement vorteilhafterweise auf der Oberseite eine Mulde auf, welche als Angriffsfläche dient, um das Drehelement und damit das Kippelement in eine gewünschte Richtung zu kippen. Vorzugsweise sind diese Mulde und/oder ein die Mulde tragendes Element derart ausgeführt, gelagert oder befestigt, dass sie sich nicht mit dem Drehelement um die Rotationsachse mitdrehen sondern drehfest, insbesondere bezüglich des Fahrzeuges oder der Mittelkonsole des Fahrzeuges, ausgeführt sind. Alternativ dazu dreht sich diese Mulde mit dem Drehelement mit oder ist ein Teil des Drehelementes.

Das Drehelement kann zudem derart ausgeführt und gelagert sein, dass es in Richtung Rotationsachse oder Längsachse drückbar ist (Druck-Drehelement). Zudem kann es auch kippbar ausgeführt sein (Druck-Kipp-Drehelement).

Besonders bevorzugt ist das Drehelement derart unabhängig von dem Kippelement ausgeführt, dass ein Drücken des Drehelementes kein Drücken des Kippelementes bewirkt. Das Kippelement kann in diesem Fall insbesondere nicht in Richtung Rotationsachse oder Längsachse gedrückt oder bewegt werden.

Insbesondere dazu kann das Drehelement von dem Kippelement abgesetzt gebildet sein. Das Drehelement kann dabei die Formgebung des Kippelementes aufnehmen oder fortsetzen, um einem Nutzer mit Hinblick auf die Kippbewegung zu signalisieren, dass das Drehelement und das Kippelement eine Einheit bilden.

Vorteilhafterweise nimmt der zur Rotationsachse senkrechte Durchmesser des Drehelementes in Druckrichtung von der Oberseite zur Unterseite des Drehelementes zunächst zu und dann ab.

Um einem Fahrer mit Hinblick auf die Kippbewegung zu signalisieren, dass das Drehelement und das Kippelement eine Einheit bilden, kann der zur Rotationsachse senkrechte Durchmesser des Drehelementes an der Unterseite im Wesentlichen dem zur Rotationsachse senkrechten Durchmesser des Kippelementes an der Oberseite entsprechen.

Eine vorteilhafte Ausführungsform der Erfindung sieht vor, dass das Kippelement und/oder das Drehelement um ein Kugellager oder Kugelgelenk kippbar gelagert sind. Alternativ oder ergänzend dazu ist vorzugsweise vorgesehen, dass das Drehelement in dem Kippelement drehbar gelagert ist, und mittelbar über das Kippelement, insbesondere zusammen mit dem Kippelement, um ein Kugellager oder Kugelgelenk kippbar gelagert ist.

Die seitliche Oberfläche des Kippelementes hat vorzugsweise die Gestalt einer Kugelzone, um eine Veränderung der Spaltbreite zwischen dieser Oberfläche und einer das Kippelement umgebenden kreisförmig ausgeschnittenen Blende während der Kippbewegung zu vermeiden.

Vorzugsweise ist das Kippelement derart unabhängig von dem Drehelement gebildet, dass ein Kippen des Kippelementes nicht ein Kippen des Drehelementes bewirkt. Insbesondere ist das Drehelement dabei gar nicht kippbar gelagert sondern hinsichtlich eines Kippens fest.

Eine Weiterbildung der Erfindung sieht vor, dass die Oberseite des Drehelementes, insbesondere unmittelbar, bedeckt ist durch eine kreisförmige oder scheibenförmige Kappe, die sich nicht mit dem Drehelement um die Rotationsachse dreht, und die dadurch ebenfalls verdrehhemmend wirkt. Der Radius der Kappe senkrecht zur Rotationsachse kann gleich oder geringfügig kleiner als der Radius der Oberseite des Drehelementes sein. Unter der drehfesten im Wesentlichen scheibenförmigen Kappe kann das Drehelement gedreht werden. Durch eine entsprechende Kraft auf die Kappe kann aber samt Kappe vorzugsweise das Kippelement und/oder das Drehelement gekippt werden und/oder das Drehelement gedrückt werden.

Im Rahmen der Erfindung liegt es auch, das Kippelement durch ein Schwenkelement zu ersetzen und die Kippbewegung des Kippelementes und/oder des Drehelementes durch eine Schwenkbewegung (im Wesentlichen lineare Bewegung senkrecht zur Rotationsachse) oder Schiebebewegung des Schwenkelementes und/oder des Drehelementes zu ersetzen.

Im Folgenden wird die Erfindung anhand von Beispielen unter Bezugnahme auf die folgenden Figuren näher erläutert:
- Figur 1: zeigt eine Perspektivdarstellung einer Bedieneinrichtung;
- Figuren 2 bis 4: zeigen verschiedene Ausführungsvarianten einer Bedieneinrichtung in Draufsicht von oben.

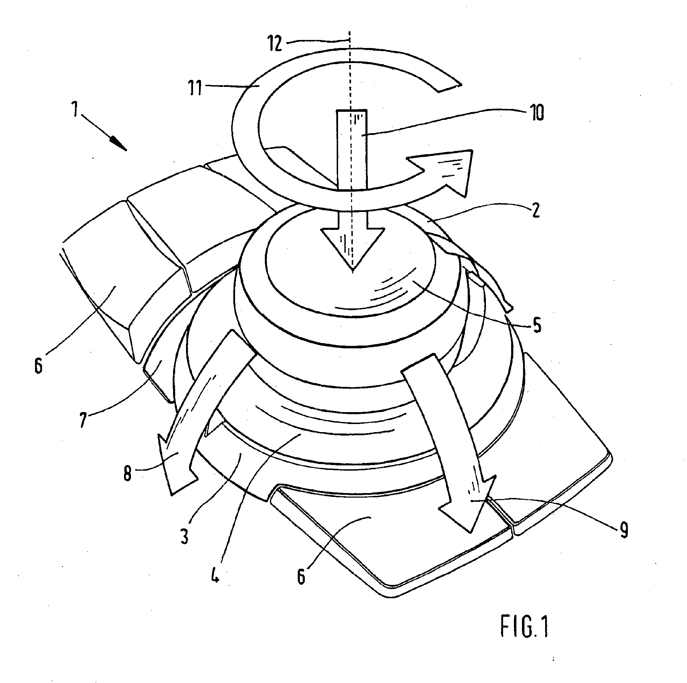

Figur 1 zeigt eine Bedieneinrichtung 1 mit einem um eine Rotationsachse (Symmetrieachse, Längsachse) 12 in beide Richtungen drehbaren Drehelement 2 (Drehfreiheitsgrad ist exemplarisch durch Pfeil 11 angedeutet) und mit einem unter dem Drehelement 2 angeordneten Kippelement 3. Die Kipprichtungen 8 und 9 stehen ausgehend vom Grund- oder Ruhezustand im Wesentlichen senkrecht zur Rotationsachse 12.

Das Kippelement 3 wirkt in diesem Beispiel derart mit dem Drehelement 2 zusammen, dass ein Kippen des Kippelementes 3 ein Kippen des Drehelementes 2 (Kipp-Drehelement) in die gleiche Kipprichtung bewirkt und umgekehrt (Kippen des Drehelementes 2 bewirkt Kippen des Kippelementes 3 in die gleiche Kipprichtung). Das Kippelement 3 ist dabei vorzugsweise nicht drehbar ausgeführt.

Das Kippelement 3 ragt in einer Ebene senkrecht zur Rotationsachse 12 des Drehelementes 2 unter dem Drehelement 2 hervor. Der maximale Durchmesser des Kippelementes 3 ist größer als der maximale Durchmesser des Drehelementes 2. Das Drehelement 2 und/oder das Kippelement 3 weisen senkrecht zur Rotationsachse einen kreisförmigen Querschnitt auf. Das Kippelement 3 und das Drehelement 2 sind konzentrisch zueinander ausgebildet.

Die unter dem Drehelement 2 hervorragende, insbesondere ringförmige, Oberseite des Kippelementes 3 weist eine um das Drehelement 2 umlaufende Rille 4 oder Rinne auf, welche als Angriffsfläche dient, um das Kippelement 3 und damit gegebenenfalls das Drehelement 2 in eine gewünschte Richtung zu kippen.

Das Drehelement 2 weist auf der Oberseite eine Mulde 5 auf, welche als Angriffsfläche dient, um das Drehelement 2 und damit das Kippelement 3 in eine gewünschte Richtung zu kippen.

Zudem ist das Drehelement 2 durch eine Kraft auf die Mulde 5 in Richtung (angedeutet durch Pfeil 10) der Rotationsachse 12 drückbar. Das Drehelement 2 ist dann je nach Ausführungsvariante als Druck-Drehelement oder Druck-Kipp-Drehelement ausgeführt.

Die Mulde 5 auf der Oberseite des Drehelementes hat den Vorteil, dass die betätigenden Finger zur Mitte hin zentriert werden, wo auch die Drückbewegung am besten eingeleitet werden sollte, um Fehlbetätigungen durch ein außermittiges Drücken zu vermeiden. Die Gefahr eines ungewollten Verkippens des Drehelementes und damit des Kippelementes beim Drücken wird damit verringert.

Das Drehelement 2 ist also um die z-Achse 10 drehbar und in z-Richtung 10 drückbar. Das Kippelement 3 und gegebenenfalls das Drehelement 2 sind in x- und y-Richtung 8,9 und in die jeweils entgegen gesetzte Richtung kippbar.

Das Drehelement 2 ist derart unabhängig von dem Kippelement 3 ausgeführt, dass ein Drücken des Drehelementes 2 kein Drücken des Kippelementes 3 bewirkt. Das Kippelement 3 ist nicht in Richtung Rotationsachse 12 drückbar.

Das Kippelement 3 ist eingerahmt durch oder eingebettet in eine Blende 7, die auch Tasten oder Schalter 6 umfassen kann oder daraus gebildet sein kann. Das Kippelement 3 kann auch als Drehelement-Einfassung betrachtet werden.

Das Kippelement 3 bietet also zusätzliche Angriffsflächen für das Kippen oder Verschieben des Drehelementes, die gleichzeitig oder alternativ genutzt werden können.

Ein Drehen (des Drehelementes) und ein Kippen (des Kippelementes) kann dabei aus derselben Handhaltung und Fingerstellung heraus ausgeführt werden. Aus dem Zugriff zum Drehen kann, ohne Umgreifen zu müssen, das Kippen bewirkt werden.

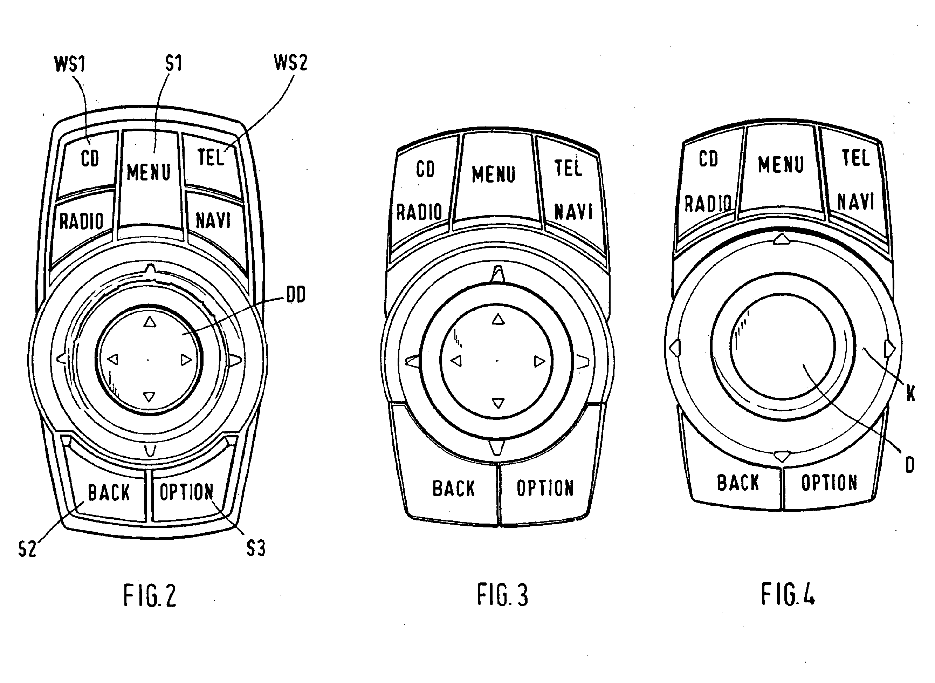

Figur 2 zeigt eine Bedieneinrichtung mit einem zentralen Dreh-Drück-Element DD, das um seine Rotationsachse drehbar und in Richtung Rotationsachse drückbar ist, um Funktionen auszuwählen oder Funktionswerte einzugeben. Zudem ist das Dreh-Drück-Element DD senkrecht zur Rotationsachse kippbar oder verschiebbar, beispielsweise in Richtung der vier dargestellten Pfeilsymbole.

Um das Dreh-Drück-Element DD herum sind verschiedene Schalter oder Taster angeordnet, durch die verschiedene Bedienprozeduren ausgelöst werden können.

Vor dem Dreh-Drück-Element DD ist zentral ein Schalter S1 mit konvexer Oberfläche angeordnet, dessen Betätigung die Auswahl und die Darstellung des Hauptmenüs bewirkt. Links und rechts neben dem Schalter S1 ist jeweils ein Wippschalter WS1, WS2 mit konkaver Oberfläche angeordnet.

Durch eine Betätigung des ersten Wippschalters WS1 kann ein CD-Menü und/oder ein Radio-Menü ausgewählt und dessen Darstellung ausgelöst werden. Durch eine Betätigung des zweiten Wippschalters WS2 kann ein Telefon-Menü und/oder ein Navigations-Menü ausgewählt und dessen Darstellung ausgelöst werden.

Hinter dem Dreh-Drück-Element DD ist auf der linken Seite ein Schalter S2 angeordnet, dessen Betätigung einen Sprung zu dem zeitlich zuletzt angezeigten oder ausgewählten Menü und dessen Darstellung bewirkt. Hinter dem Dreh-Drück-Element DD ist auf der rechten Seite ein Schalter S3 angeordnet, dessen Betätigung die Auswahl eines, insbesondere kontextabhängigen, Optionsmenüs und dessen Darstellung bewirkt.

Das Dreh-Drück-Element DD selbst dient dabei der Groborientierung bei der Annäherung der bedienenden Hand. Durch die Nachbarschaft von konvexer und konkaven Oberflächen ist die MENÜ-Taste S1 auch ohne Blickabwendung vom Fahrgeschehen als Mitte identifizierbar. Die Wipptasten W1, W2 bieten den Vorteil, dass ihre konkave Ausprägung dem betätigenden Finger im Moment des Kontakts bereits taktile Informationen darüber gibt, ob sich der Finger auf der vorderen (CD / TEL) oder hinteren (RADIO / NAVI) Fläche befindet.

Die vor dem Dreh-Drück-Element DD angeordneten Schalter sind leichter zu erreichen als die dahinter. Deswegen werden die dahinter angeordneten Schalter mit seltener genutzten Funktionen BACK und OPTION belegt.

Links und rechts vom Controller befinden sich keine Tasten, um das Links-Rechts-Bewegen des Dreh-Drück-Elementes DD nicht zu behindern. Aufgrund der Einbausituation im Fahrzeug (Mittelkonsole), bei der typischerweise das Hand-Arm-System auf einer Armauflage ruht, hat die betätigende Hand eine stabilere Fixation für Bewegungen nach vorne und zurück als für Bewegungen nach links und rechts. Durch das Freilassen der Bereiche links und rechts vom Dreh-Drück-Element DD Controller können hier alternative Angriffsmöglichkeiten für die Finger geschaffen werden, welche ein Widerlager für eine Bewegung nach links und rechts bilden können.

Die in Figur 3 dargestellte Bedieneinrichtung entspricht weitgehend der Bedieneinrichtung aus Figur 2. Lediglich die Detailausführung der Wippschalter, des Dreh-Drück-Elementes und deren Einfassungen sind anders gestaltet.

Die in Figur 4 dargestellte Bedieneinrichtung entspricht weitgehend der Bedieneinrichtung aus Figur 3. In diesem Fall ist lediglich das Dreh-Drück-Element anders ausgeführt. Es umfasst im Wesentlichen ein drückbares Drehelement D (analog zum Drehelement 2 aus Figur 1) und ein darunter angeordnetes gegenüber dem Drehelement D hervorragendes Kippelement K, das vorzugsweise zusammen mit dem Drehelement D oder unabhängig von dem Drehelement D kippbar ausgeführt ist. Dadurch, dass seitlich keine Schalter angeordnet sind, kann das Kippelement, und damit gegebenenfalls das Drehelement leichter gekippt werden.

Die Bedieneinrichtung ist mit einer Prozessoreinrichtung gekoppelt, wobei die Prozessoreinrichtung derart eingerichtet ist, dass durch das Dreh-Drück-Element und die Schalter dieselbe fahrzeugtechnische Komponente oder die gleichen fahrzeugtechnischen Komponenten ansprechbar sind. So können durch die Wippschalter direkt Menüpunkte (Radio, CD, Telefon oder Navigationssystem) ausgewählt werden, und dann entsprechende Parameter (Empfangsfrequenz, Temperatur oder Maßstab) durch das Dreh-Drück-Element geändert werden. Die Bedieneinrichtung und die Prozessoreinrichtung sind mit einer Anzeigeeinrichtung gekoppelt, auf welcher beispielsweise verschiedene Menüpunkte oder Funktionswerte dargestellt werden.

## Patentansprüche

1. Kraftfahrzeug
mit einer Bedieneinrichtung,
mit einem Dreh-Drück-Element (2,DD), das auf einer Mittelkonsole des Kraftfahrzeuges angeordnet ist,
mit zwei Wippschaltern (WS1, WS2), die vor dem Dreh- Drück-Element (2,DD) angeordnet sind,
wobei die Wippschalter (WS1, WS2) symmetrisch um einen zentral vor dem Dreh-Drück-Element angeordneten Drück- Schalter (S1) angeordnet sind,
bei der die Wippschalter (WS1,WS2) haptisch von dem Drück-Schalter (S1) unterscheidbar sind,
mit zwei weiteren Schaltern (S2,S3), insbesondere Drück-Schaltern, die hinter dem Dreh-Drück-Element (2,DD) angeordnet sind,
bei der die Wippschalter (WS1,WS2), der Drück-Schalter (S1)und die weiteren Schalter (S2,S3) das Dreh-Drück-Element (2,DD) umgeben,
bei der das Zentrum der Wippschalter weniger als 6 Zentimeter von dem Zentrum des Dreh-Drück-Elementes entfernt ist,
mit einer Prozessoreinrichtung, und mit einer
Anzeigeeinrichtung,
bei der die Prozessoreinrichtung derart eingerichtet und mit der Bedieneinrichtung und der Anzeigeeinrichtung gekoppelt ist,
- dass durch die vor dem Dreh-Drück-Element angeordneten Wippschalter mindestens eine der folgenden Funktionen oder Menüpunkte auswählbar sind: CD, Radio, Telefon, Navigation,
- dass durch die hinter dem Dreh-Drück-Element angeordneten Schalter mindestens eine der folgenden Funktionen oder Menüpunkte auswählbar sind: Zurück und Option, und
- dass durch den zentral vor dem Dreh-Drück-Element angeordneten Drück-Schalter (S1)die Funktion Hauptmenü auswählbar ist.

2. Kraftfahrzeug nach Anspruch 1, bei dem die Wippschalter (WS1,WS2) jeweils eine konkave Oberfläche aufweisen, und bei dem der Drück-Schalter (S1) eine konvexe Oberfläche aufweist.

3. Kraftfahrzeug nach einem der vorhergehenden Ansprüche, bei dem durch die vor dem Dreh-Drück-Element (2, DD) angeordneten Wippschalter (WS1,WS2) Funktionen auswählbar sind, die in der Regel häufiger ausgewählt werden als die Funktionen, die durch die hinter dem Dreh-Drück-Element (2, DD) angeordneten Schalter (S2,S3) auswählbar sind.

4. Kraftfahrzeug nach einem der vorhergehenden Ansprüche, bei dem das Dreh-Drück-Element senkrecht zur Drück-Richtung in zumindest vier Richtungen kippbar oder schiebbar ausgeführt ist,.

5. Kraftfahrzeug nach einem der vorhergehenden Ansprüche, bei dem das Dreh-Drück-Element ein um eine Rotationsachse (12) drehbares und in Richtung der Rotationsachse drückbares Drehelement (2) und ein unter dem Drehelement (2) angeordnetes Kippelement (3) umfasst.

6. Kraftfahrzeug nach einem der vorhergehenden Ansprüche, bei der das Kippelement (3) derart mit dem Drehelement (2) zusammenwirkt, dass ein Kippen des Kippelementes (3) ein Kippen des Drehelementes (2) bewirkt.

7. Kraftfahrzeug nach einem der vorhergehenden Ansprüche, bei der das Kippelement (3) derart unabhängig von dem Drehelement (2) gelagert ist, dass ein Drehen des Drehelementes (2) um seine Rotationsachse (12) kein Drehen des Kippelementes (3) bewirkt.

8. Kraftfahrzeug nach einem der vorhergehenden Ansprüche, bei der das Kippelement (3) in einer Ebene senkrecht zur Rotationsachse des Drehelementes (2) unter dem Drehelement (2) hervorragt.

9. Kraftfahrzeug nach einem der vorhergehenden Ansprüche, bei der das Kippelement (3) und das Drehelement (2) konzentrisch ausgebildet sind.

10. Kraftfahrzeug nach einem der vorhergehenden Ansprüche, bei der das Drehelement (2) derart unabhängig von dem Kippelement (3) ausgeführt ist, dass ein Drücken des Drehelementes (2) kein Drücken des Kippelementes (3) bewirkt.

11. Kraftfahrzeug nach einem der vorhergehenden Ansprüche, bei der das Kippelement (3) derart unabhängig von dem Drehelement (2) gebildet ist, dass ein Kippen des Kippelementes (3) nicht ein Kippen des Drehelementes (2) bewirkt.

## Claims

1. A motor vehicle with an operating device, with a rotary push element (2, DD), which is arranged on a centre console of the motor vehicle, with two rocker switches (WS1, WS2), which are arranged before the rotary push element (2, DD), wherein the rocker switches (WS1, WS2) are arranged symmetrically about a push switch (S1) arranged centrally before the rotary push element, in which the rocker switches (WS1, WS2) can be distinguished haptically from the push switch (S1), with two further switches (S2, S3), more especially push switches, which are arranged behind the rotary push element (2, DD), in which the rocker switches (WS1, WS2), the push switch (S1) and the further switches (S2, S3) surround the rotary push element (2, DD), in which the centre of the rocker switches is less than 6 centimetres away from the centre of the rotary push element, with a processor device, and with a display device, in which the processor device is set up and coupled to the operating device and the display device in such a way that
- by means of the rocker switches arranged before the rotary push element, at least one of the following functions or menu items can be selected: CD, radio, telephone, navigation, in that
- by means of the switches arranged behind the rotary push element, at least one of the following functions or menu items can be selected: back and option, and in that
- by means of the push switch (S1) arranged centrally before the rotary push element, the function main menu can be selected.

2. A motor vehicle according to claim 1, wherein the rocker switches (WS1, WS2) in each case have a concave surface, and wherein the push switch (S1) has a convex surface.

3. A motor vehicle according to any one of the preceding claims, wherein, by means of the rocker switches (WS1, WS2) arranged before the rotary push element (2, DD), functions can be selected that are generally selected more frequently than the functions that can be selected by the switches (S2, S3) arranged behind the rotary push element (2, DD).

4. A motor vehicle according to any one of the preceding claims, wherein the rotary push element, perpendicular to the push direction, can be tilted or pushed in at least four directions.

5. A motor vehicle according to any one of the preceding claims, wherein the rotary push element comprises a rotary element (2) that can be rotated about a rotational axis (12) and can be pushed in the direction of the rotational axis and a tilting element (3) arranged below the rotary element (2).

6. A motor vehicle according to any one of the preceding claims, wherein the tilting element (3) cooperates with the rotary element (2) in such a way that a tilting of the tilting element (3) brings about a tilting of the rotary element (2).

7. A motor vehicle according to any one of the preceding claims, wherein the tilting element (3) is mounted independently of the rotary element (2) in such a way that a rotation of the rotary element (2) about its rotational axis (12) does not bring about a rotation of the tilting element (3).

8. A motor vehicle according to any one of the preceding claims, wherein the tilting element (3) projects in a plane perpendicular to the rotational axis of the rotary element (2) below the rotary element (2).

9. A motor vehicle according to any one of the preceding claims, wherein the tilting element (3) and the rotary element (2) are concentric.

10. A motor vehicle according to any one of the preceding claims, wherein the rotary element (2) is configured to be independent of the tilting element (3) in such a way that a pushing of the rotary element (2) does not bring about a pushing of the tilting element (3).

11. A motor vehicle according to any one of the preceding claims, wherein the tilting element (3) is formed independently of the rotary element (2) in such a way that a tilting of the tilting element (3) does not bring about a tilting of the rotary element (2).

## Revendications

1. Véhicule
comportant un dispositif de commande comprenant :
un élément de compression rotatif (2, DD) qui est monté sur une console médiane du véhicule,
deux commutateurs à bascule (WS1, WS2) qui sont montés en avant de l'élément de compression rotatif (2, DD),
ces commutateurs à bascule (WS1, WS2) étant montés symétriquement autour d'un commutateur à bouton poussoir (S1) monté dans une position médiane en avant de l'élément de compression rotatif,
le commutateur à bascule (WS1, WS2) pouvant être distingué aux touches du commutateur à bouton poussoir (S1),
deux autres commutateurs (S2, S3) en particulier des commutateurs à bouton poussoir qui sont montés en arrière de l'élément de compression rotatif (2, DD),
le commutateur à bascule (WS1, WS2) le commutateur à bouton poussoir (S1) et les autres commutateurs (S2, S3) entourant l'élément de compression rotatif (2, DD),
le centre du commutateur à bascule étant éloigné de moins de 6 centimètres du centre de l'élément de compression rotatif,
un dispositif de processeur et un dispositif d'affichage,
le dispositif de processeur étant réalisé et accouplé au dispositif de commande et le dispositif d'affichage,
de sorte que
par le commutateur à bascule monté en avant de l'élément de compression rotatif, au moins l'une des fonctions ou au moins l'un des points de menu suivants puissent être sélectionnés : CD, radio, téléphone, navigation,
par le commutateur monté en arrière de l'élément de compression rotatif, au moins l'une des fonctions ou au moins l'un des points de menu suivants puissent être sélectionnés : retour et option, et
par le commutateur à bouton poussoir (S1) monté dans une position médiane en avant de l'élément de compression rotatif, la fonction menu principal puisse être sélectionnée.

2. Véhicule conforme à la revendication 1, dans lequel les commutateurs à bascule (WS1, WS2) ont respectivement une surface concave et le commutateur à bouton poussoir (S1) a une surface convexe.

3. Véhicule conforme à l'une des revendications précédentes, dans lequel, par le commutateur à bascule (WS1, WS2) monté en avant de l'élément de compression rotatif (2, DD) on peut sélectionner des fonctions qui sont en règle générale plus souvent sélectionnées que les fonctions qui peuvent être sélectionnées par le commutateur (S2, S3) situé en arrière de l'élément de compression rotatif (2, DD).

4. Véhicule conforme à l'une des revendications précédentes, dans lequel, l'élément de compression rotatif est réalisé de façon à pouvoir être basculé ou poussé perpendiculairement à la direction de compression dans au moins quatre directions.

5. Véhicule conforme à l'une des revendications précédentes, dans lequel l'élément de compression rotatif comporte un élément rotatif (2) mobile en rotation autour d'un axe de rotation (12) et pouvant être comprimé en direction de l'axe de rotation et en élément basculant (3) monté au-dessous de l'élément rotatif (2).

6. Véhicule conforme à l'une des revendications précédentes,
**caractérisé en ce que**
l'élément basculant (3) coopère avec l'élément rotatif (2) de sorte qu'un basculement de l'élément basculant (3) entraine un basculement de l'élément rotatif (2).

7. Véhicule conforme à l'une des revendications précédentes, dans lequel l'élément basculant (3) est monté indépendant de l'élément rotatif (2) de sorte qu'une rotation de l'élément rotatif (2) autour de son axe de rotation (12) n'entraine aucune rotation de l'élément basculant (3).

8. Véhicule conforme à l'une des revendications précédentes, dans lequel l'élément basculant (3) fait saillie au-dessous de l'élément rotatif (2) dans un plan perpendiculaire à l'axe de rotation de cet élément rotatif (2).

9. Véhicule conforme à l'une des revendications précédentes, dans lequel l'élément basculant (3) et l'élément rotatif (2) sont concentriques.

10. Véhicule conforme à l'une des revendications précédentes, dans lequel l'élément rotatif (2) est réalisé indépendant de l'élément basculant (3) de sorte qu'une compression de l'élément rotatif (2) n'entraine aucune compression de l'élément basculant (3).

11. Véhicule conforme à l'une des revendications précédentes, dans lequel l'élément basculant (3) est réalisé indépendant de l'élément rotatif (2) de sorte qu'un basculement de l'élément basculant (3) n'entraine pas un basculement de l'élément rotatif (2).
